# EUROPEAN PATENT APPLICATION

(11) **EP 4 556 723 A1**
(43) Date of publication of application: **21.05.2025**
(21) Application number: 24213588.7
(22) Date of filing: 18.11.2024
(51) Int. Cl.: F16B 2/24, B25C 1/18, F16B 5/06, H02G 3/00, F16B 15/00

(54) **NAIL GUN BRACKET AND METHOD**

(30) Priority: 17.11.2023 US 202363600592 P
(71) Applicant: Erico International Corporation, Solon, OH 44139 (US)
(72) Inventor: Wilson, Eric J., Solon (US); Le Roux, Adrien, Lyon (FR); Klinkenberg, Stefan, Mönchengladbach (DE)
(74) Representative: Barker Brettell LLP

(57) **Abstract**

A bracket (100) can be configured to support an object relative to a substrate of concrete or other materials. The bracket (100) can include gate portion with a protrusion that can be engaged to move the gate portion to a closed configuration. The bracket (100) can include a recessed portion (125, 130) can allow the bracket to deform upon installation.

## Description

### BACKGROUND

In many applications it may be useful to fixedly support raceways, including conduit, such as electric metallic tube (EMT) conduit, or cable, such as metal clad (MC) cable, relative to a substrate such as concrete. In some contexts, support of the raceways and cables must be provided at least at or within specified distances along a support structure and within specified distances from a junction box or other termination point as required by code. It may also be useful to fixedly support other objects relative to substrates, including threaded rods, support lines (e.g., wires or metal cables), and so on.

### SUMMARY

Some examples of the disclosed technology can provide improved nail gun brackets and related methods. For example, some implementations can provide a bracket with a contact portion that is configured to seat against a substrate and a recessed portion that is offset away from the contact portion. Such arrangements, for example, can provide beneficial deformation of a bracket during installation, including as can provide improved alignment and overall security.

In some examples, a nail gun bracket is provided for supporting an object relative to a substrate of concrete or other material. a base portion. A gate portion can be hingedly connected to a base portion, to be movable between an open configuration, to receive an object into an interior volume of the bracket, and a closed configuration, to retain the object within the interior volume. The base portion can include an object side that faces toward the interior volume and a substrate side opposite the object side and configured to face toward the substrate in an installed configuration.

The substrate side can define a contact portion and a recessed portion. The contact portion can define a contact plane along the substrate for an installed configuration of the nail gun bracket. The recessed portion can be offset from the contact plane toward the interior volume. The recessed portion can include a support boss that receives a nail gun nail to secure the base portion to the substrate. The support boss can one or more of: protruding outwardly away from the interior volume to a support-boss distal surface that is offset from the contact plane toward the interior volume; or extending in an elongate direction along the base portion between, and being offset toward the interior volume from, a first contact pad and a second contact pad.

In some examples, the first and second contact pads can be configured to seat on the substrate in the installed configuration.

In some examples, the first and second contact pads can extend along the contact plane.

In some examples, the support boss can include a first hole to receive the nail gun nail through the base portion and into the substrate.

In some examples, the support boss further can include a keyhole cutout, spaced apart from the first hole.

In some examples, the contact portion can further include rails spaced from opposed lateral sides of the support boss and extending along the contact plane. The rails can be configured to seat on the substrate in the installed configuration (e.g., can be planar rails).

In some examples, the rails can be separated from the support boss by recessed channels having a greater offset from the contact plane toward the interior volume than does the support boss.

In some examples, the recessed channels can extend along an entire elongate length of the contact portion.

In some examples, the gate portion can include a protrusion that extends away from the interior volume. The gate portion can be movable from the open configuration to the closed configuration by applying a closing force to the protrusion at an opposite side of protrusion from the base portion.

In some examples, the base portion can include a protruding tab and the gate portion can include an aperture with an upper edge. The protruding tab can be received into the aperture to be retained by the upper edge as the gate portion is moved to the closed configuration.

In some examples, the protruding tab can angle toward the contact plane.

In some examples, the gate portion can include an access opening aligned with the support boss to receive a nail gun barrel through the access opening to install the nail gun nail through the support boss.

In some examples, a method is provided for supporting an object relative to a substrate of concrete or other material. With a nail gun, a nail gun bracket (e.g., as variously detailed above) can be secured to a substrate by firing a nail from within an interior volume of the bracket, through a support boss, to deform the support boss toward the substrate. After securing the bracket to the substrate, the nail gun can be removed from the bracket. With the gate portion in an open configuration, an object can be inserted past a gate portion into an interior volume of the bracket. The object can be secured within the interior volume by moving the gate portion toward the base portion, from the open configuration to a closed configuration.

In some examples, securing the nail gun bracket can include extending a barrel of the nail gun through an access opening in the gate portion of the bracket.

In some examples, moving the gate portion toward the base portion can include engaging a protrusion of the gate portion that extends away from the interior volume to move the base portion toward the substrate.

In some examples, the support boss can be deformed to contact the substrate.

Some examples of the disclosed technology can provide a nail gun bracket for supporting an object relative to a substrate of concrete or other material. The nail gun bracket can include a base portion, and a gate portion hingedly connected to the base portion. The gate portion can be movable between an open configuration, to receive an object into an interior volume of the bracket, and a closed configuration, to retain the object within the interior volume. The gate portion can include a protrusion that extends away from the interior volume, and can be movable from the open configuration to the closed configuration by engagement of the protrusion at an opposite side of protrusion from the base portion.

In some examples, the base portion can include a contact portion that defines a contact plane along the substrate, and a non-contact portion recessed from the contact plane.

In some examples, the base portion can include a first hole to receive a nail through the base portion into the substrate.

In some examples, the base portion can include a keyhole cutout, spaced apart from the first hole.

In some examples, the gate portion can include a cutout.

In some examples, the protrusion can be an integrally formed tab.

In some examples, the protrusion can include a bend that orients a free end of the protrusion away from the base portion.

In some examples, the base portion can include a contact portion that defines a contact plane along the substrate and a first tab that angles toward the contact plane. The gate portion can include an opening that receives the first tab to lock the gate portion in the closed configuration.

Some examples of the disclosed technology provide a method for supporting an object relative to a substrate of concrete or other material. A barrel of a nail gun can be extended through a first hole in a gate portion of a bracket. With the barrel through the first hole, the bracket can be secured to the substrate with a nail through a second hole in a base portion of the bracket. After securing the bracket to the substrate, the nail gun can be removed from the bracket and, with the gate portion in an open orientation, the object can be inserted past a gate portion into an interior volume of the bracket. The object can be secured within the interior volume by engaging a protrusion of the gate portion that extends away from the interior volume to move the gate portion toward the base portion, from the open configuration to a closed configuration.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the nail gun bracket may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosed technology and, together with the description, serve to explain the principles of examples of the disclosed technology:
FIGS. 1A and 1B (FIGS. 1) are top isometric views of a bracket in a pre-installation configuration and a closed configuration, respectively, according to an example of the disclosure.
FIG. 2 is a side elevation view of the bracket of FIG. 1 in the pre-installation configuration during installation onto a substrate.
FIG. 3 is a top plan view of the bracket of FIG. 1 in the pre-installation configuration.
FIG. 4 is a front elevation view of the bracket of FIG. 1 in the pre-installation configuration.
FIG. 5 is a rear elevation view of the bracket of FIG. 1 in the pre-installation configuration.
FIG. 6 is a schematic illustration of an example method for supporting an object according to an example of the disclosure.
FIGS. 7A and 7B (FIGS. 7) are top isometric views of a bracket in a pre-installation configuration and a closed configuration, respectively, according to an example of the disclosure.
FIGS. 8 and 9 show top isometric and other partial views of latch structures for brackets according to examples of the disclosure.

### DETAILED DESCRIPTION

Before any examples of the disclosed technology are explained in detail, it is to be understood that the disclosed technology is not limited in its application to the details of construction and the arrangement of components set forth in the following description or illustrated in the following drawings. The disclosed technology is capable of other examples and of being practiced or of being carried out in various ways. Also, it is to be understood that the phraseology and terminology used herein is for the purpose of description and should not be regarded as limiting.

The following discussion is presented to enable a person skilled in the art to make and use examples of the disclosed technology. Various modifications to the illustrated examples will be readily apparent to those skilled in the art, and the generic principles herein can be applied to other examples and applications without departing from examples of the disclosed technology. Thus, the disclosed technology is not intended to be limited to examples shown, but are to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosed technology. Skilled artisans will recognize the examples provided herein have many useful alternatives and fall within the scope of examples of the disclosed technology.

Some of the discussion below describes brackets that can be used to support a conduit or a cable relative to a structure. The context and particulars of this discussion are presented as examples only. For example, different implementations of the disclosed technology can be configured in various ways, including with other shapes and arrangements of elements. Similarly, examples of the disclosed technology can be used in various arrangements, including with substrates or various other assemblies that may differ from those expressly illustrated or described herein. In this regard, for example, some examples not expressly discussed below can include some or all of the components of any number of the examples expressly described and illustrated below, in any variety of combinations. Further, some examples can be employed to support objects other than conduit or cables, including hanging (e.g., threaded) rods, or other support brackets, and some examples may be installed with tools other than nail guns or fasteners other than nails.

In conventional arrangements, conduit, cable, or other objects can be secured to structures, including concrete structures, in various ways. In some cases, a bracket can be attached to concrete using a nail gun to drive a nail through the bracket and into a concrete substrate. Conduit or cable (or other objects) can then be supported, directly or indirectly, by the bracket. Although conventional arrangements can provide useful support for conduit and cable (or other objects), installation can require inconvenient operations to hold the bracket in place against the concrete (e.g., far above the head of an operator), misfires of nail guns can render parts unusable, and manipulation of brackets after installation may be relatively difficult (e.g., because far above the head of an operator). Further, some conventional designs configured to seat against a support substrate when installed may exhibit unfavorable deformation patterns during installed, which may lead to generally misaligned or reduced-strength installations.

Examples of the disclosed technology can address these or other issues. For example, some brackets can include gate portions that are movable relative to base portions (e.g., via integral attachment by a living hinge). Thus, after a bracket is installed with the base portion secured to a substrate, with a gate portion in an open configuration, objects (e.g., cables) can be received past the gate portion into an interior volume of the bracket. The gate portion can then be moved to a closed configuration, to secure the objects within the interior volume and thus ensure that the objects are supported relative to the substrate.

In some examples, a protrusion can extend from the gate portion to the outside of the interior volume, to provide an engagement structure for application of force from opposite the substrate (e.g., from the ground, for a ceiling installation). Thus, for example, an operator can use a pole or other reach-extender to easily apply a closing force to the gate portion, even for relatively high (or otherwise distant) installations. In particular, some examples can include protrusions with downwardly extending free ends, to more readily engage with the end of any particular pole or other body that an operator may be using.

Some examples can additionally (or alternatively) include other improvements. In some cases, brackets according to the disclosure can include improved latching structures for easier and more secure engagement between gate portions and corresponding base portions (e.g., to latch a bracket in a closed configuration around cable or conduit). In some cases, brackets according to the disclosure can include additional openings to facilitate easier use with nail guns, or can include base portions with recessed structures to provide improved engagement with the corresponding substrates.

Still further, brackets according to some examples can include a base portion that is configured to be installed against concrete or other substrates, and the base portion can include a combination of contact portions (e.g., that seat against the substrate) and recessed portion (e.g., that are offset away from the contact portions, in a direction away from the substrate). For example, a recessed portion of a bracket can include a support structure for a fastener that protrudes away from an interior volume of the bracket or that is recessed from a contact plane (at the substrate) defined by other portions of the nail gun bracket. In some cases, a support boss structure can protrude away from an interior volume of a bracket and can be offset away from a relevant contact plane. Such arrangements of offset structure(s), alone and particularly in combination, can provide for improved behavior of a nail gun bracket during installation, including with intentional deformation to provide improved hold in some cases, and with improved structures for initially establishing and then maintaining alignment of a nail gun barrel (or other tool).

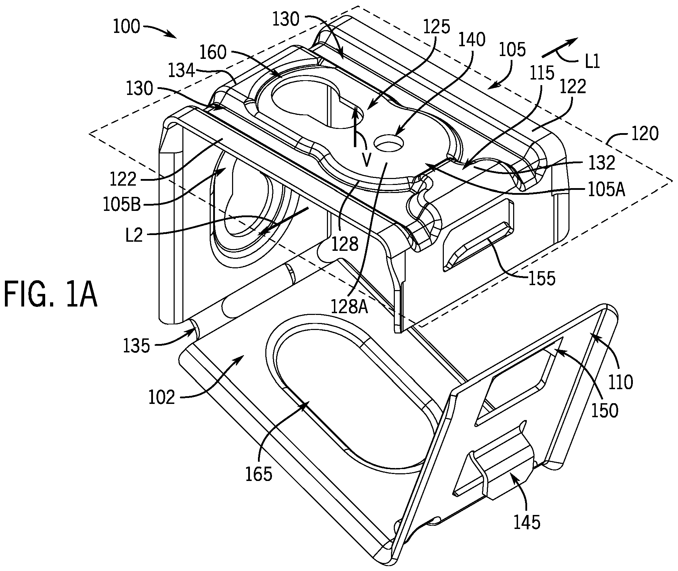

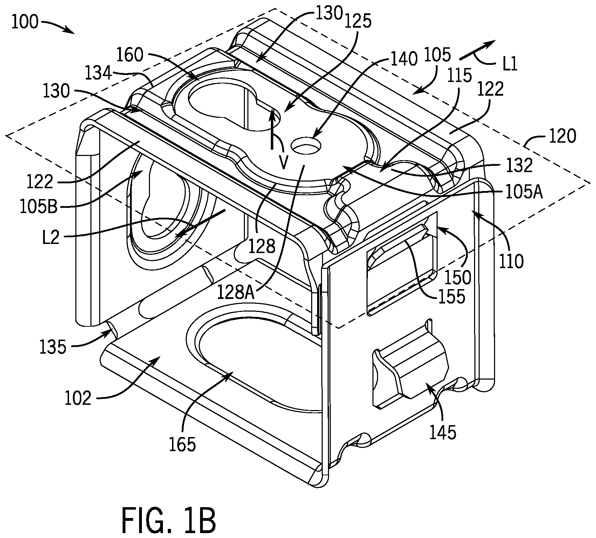

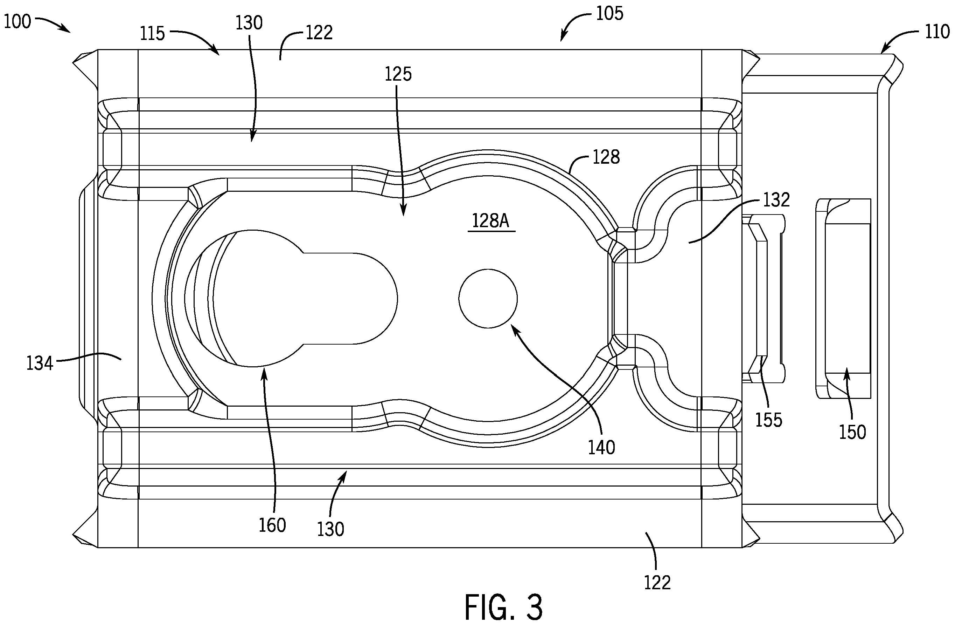

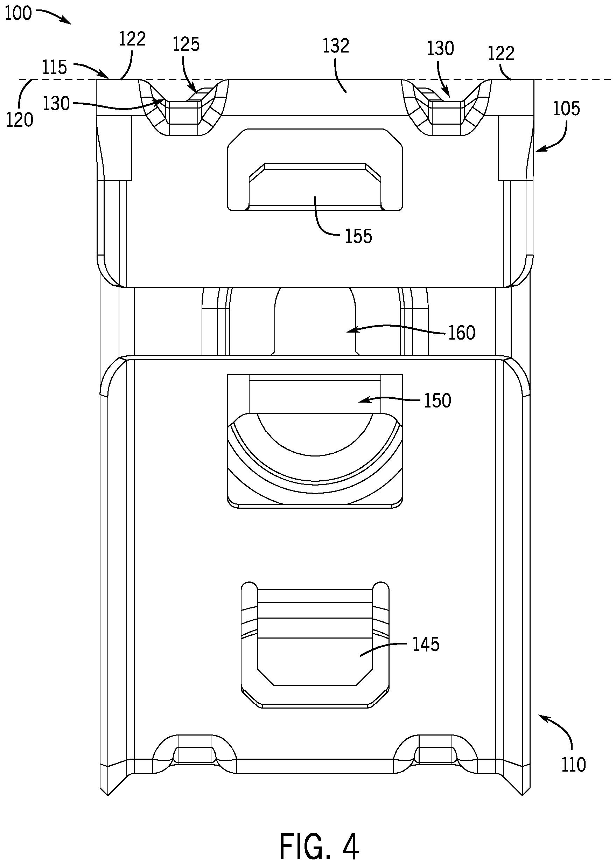

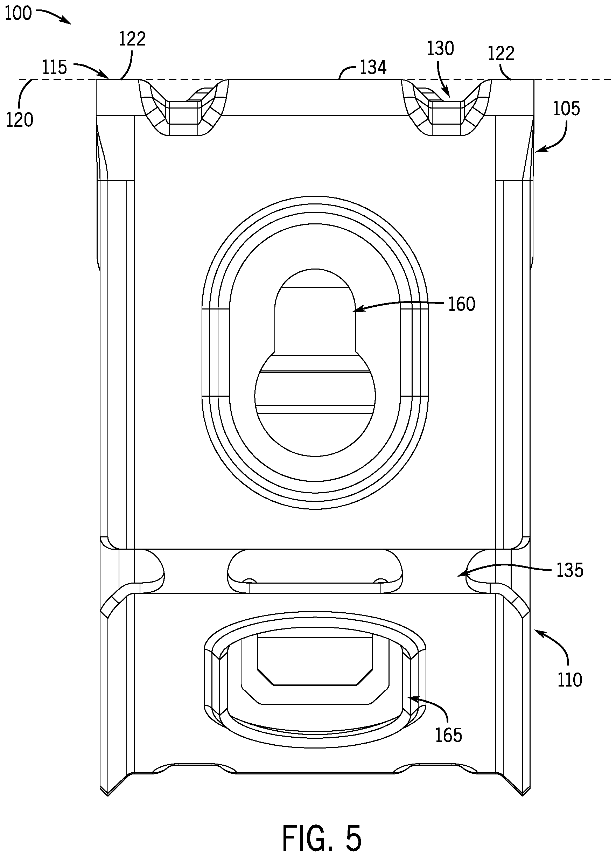

FIGS. 1-5 illustrate an example bracket 100 according to an example of the present disclosure, with the bracket 100 in an open (e.g., pre-installation) configuration. The bracket 100 includes a base portion 105 configured to extend along (e.g., seat on) a substrate in an installed configuration, a gate portion 110 that is connected to the base portion 105 by a hinge 135. Thus, as further described below, in the open (e.g., pre-installation) configuration the bracket 100 can receive cables or other objects past the gate portion 110 into an interior volume 102 of the bracket 100. The gate portion 110 can then be hingedly moved relative to the base portion 105 to a closed configuration (see FIG. 1B) to secure the objects within the interior volume 102.

The base portion 105 is generally configured to extend along the relevant substrate (e.g., concrete) and further defines a combination of protruding and recessed geometry for improved engagement with the substrate. For example, as shown in FIGS. 1 in particular, the base portion 105 can include a contact portion 115 configured to seat against the relevant substrate (e.g., concrete). Further, the base portion 105 in some examples can beneficially include various recessed structures, relative to the contact portion 115, that are configured to be recessed from a substrate during (and, e.g., also after) installation. Such arrangements, for example, can provide for a more resilient engagement between the bracket and the substrate, to complement the retention force of a corresponding fastener (e.g., nail-gun nail).

In different examples, differently configured base portions are possible. For example, as illustrated the base portion 105 is generally L-shaped, with a support portion configured to extend along the substrate and a leg that extends (relatively rigidly) from the support portion to the hinge 135. However, other geometries are possible, including as may provide different locations of a hinge relative to a support portion. In particular, a length of the base portion 105 that is configured to extend along the substrate can define a substrate side 105A that faces toward the substrate as installed, and an object side 105B that faces toward the interior volume 102. Correspondingly, the substrate side 105A in particular can define contours with greater or lesser offset relative to the substrate, as installed, or relative to a reference plane corresponding thereto. For example, different offsets may be defined relative to a reference plane defined by structures of the bracket 100 itself (e.g., structures configured to seat on the substrate, as further detailed in examples below).

In different examples, different configurations of relatively recessed and protruding geometry can be provided. In some examples, a recessed geometry can extend around (e.g., surround) an opening to receive a nail-gun nail or other fastener. Still further, in some examples, a tiered, recessed geometry can be provided. For example, different structures offset from a reference plane by different distances, to provide favorable characteristics in resilient response during installation and overall installation strength.

In some examples, a contact portion can define contact pads at select locations along a base portion (e.g., for seated engagement with the substrate). For example, discrete contact pads can be provided at opposed elongate ends of a recessed portion of a base portion of a bracket, to provide an improved resilient response of the material of the bracket therebetween during (and after) installation. In some examples, as further discussed below, contact pads can be provided at opposed ends of a support boss configured to receive a fastener for installation.

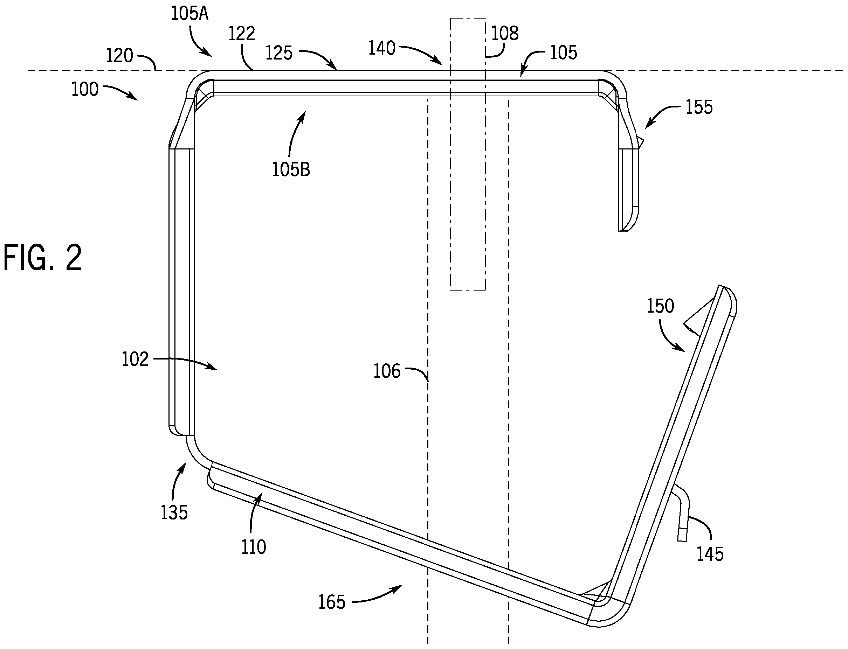

Referring again to the example of FIGS. 1-5, the contact portion 115 defines a contact plane 120 (see FIGS. 1 and 2) along which the contact portion 115 - and the base portion 105 generally - can seat against a substrate (e.g., a concrete ceiling). In particular, the contact plane 120 can be defined by lateral side rails 122 (e.g., planar rails, as shown) and end contact pads 132, 134, as shown. Thus, in an installed configuration with the substrate aligned on the plane 120, each of the side rails 122 and the contact pads 132, 134 can seat on the substrate.

In different examples, various configurations of a contact portion are possible. For example, different structures than the planar rails 122 may be provided along the edges of the contact portion 115 or otherwise spaced to either lateral direction L1, L2 from a fastener opening of the bracket 100 (e.g., a hole 140, as further discussed below). Similarly, in different examples, a reference contact plane may be defined by continuous or discontinuous regions of a base portion. For example, as shown, lateral recessed portions 130 are formed as channels extending a full elongate length of the base portion 105 and the recessed portions 130 correspondingly separate the pads 132, 134 from the rails relative to the lateral directions L1, L2. Further, a central recessed portion 125 can separate the pads 132, 134 from each other along an elongate direction, perpendicular to the lateral directions L1, L2. For example, as shown, the recessed portion 125 can include a support boss 128 for fasteners that protrudes away from the interior volume 102 toward the contact plane 120 - e.g., with a different offset of a support-boss distal (e.g., top, outer) surface 128A from the contact plane 120 than of the recessed portions 130 from the contact plane 120. Or, in other examples, contact pads, rails or other structures of a base portion can extend continuously across an elongate length or lateral width of a bracket with a common height to continuously define a contact (or other) plane.

As further discussed below, different geometries of recessed portions, and different offsets relative to an as-installed substrate (or reference contact plane), can provide different beneficial structures and structural responses for a bracket. In some cases, inclusion of some planar surfaces (e.g., the rails 122) can help to allow easy and secure seating of a bracket against a substrate for installation, as well as provide a favorable bearing surface against the substrate for improved overall response of the clip during (and after) installation. In some examples, the planar distal (e.g. outer or top) surfaces of the pads 132, 134 can provide similar benefits.

In some examples, configuration of recessed and contact portions along a base portion for a bracket can allow a bracket to be beneficially deformed by a fastener during the installation of the fastener to secure the bracket to a substrate. For example, as noted to above, the support-boss distal surface 128A is offset away from the support plane 120. As a result, installation of a nail 108 (see FIG. 2) or other fastener through the fastener hole 140 can result in the deformation of bracket 100 to move the support boss 128 upward toward the support plane 120 and the corresponding substrate (e.g., to reduce the offset or even seat part of the support boss 128 onto the substrate). In other words, inclusion of the recessed portion 125, offset from the support plane 120, may result in a localized deformation of the bracket 100 toward the substrate upon installation of fastener, to induce a corresponding resilient response from the bracket 100 that enhances the hold of the nail. In some examples, a beneficial profile for such a deformation - and the resultant installed configuration - can be provided in particular by inclusion of the distinct and distinctly offset recessed portions 125, 130 in combination. In some examples, however, only one of the types of recessed portions 125, 130 may be included.

In particular, as illustrated, the support boss 128 extends in an elongate direction along the base portion 105 between the first contact pad 132 and the second contact pad 134, bounded on lateral sides (i.e., in the lateral directions L1, L2) by the channels 130. Further, while the support boss 128 and the channels 130 are offset from the contact plane 120 toward the interior volume 102, the channels 130 have a greater offset from the contact plane 120 than does the support boss 128. Moreover, the channels 130 in particular extend along an entire elongate length of the contact portion 105, and thus also separate the contact pads 132, 134 from the rails 122.

Such an arrangement may in some cases provide particularly beneficial resilient engagement of the bracket 100 with a substrate. For example, as shown, the contact pads 132, 134 on opposing sides of the hole 140 - and the offset recessed portion 125, generally - may allow for stable and easy alignment on a substrate during staging for installation, along with a deformation mode with laterally centralized and longitudinally distributed deformation of the support boss. Further, different modes of deformation can be induced via the channels 130 and via the offset between the contact pads 132, 134 and the support boss 128, with corresponding improvements in overall engagement.

As briefly noted above, the contact portion 115 of the base portion 105 further includes the hole 140 that can receive a nail to secure the bracket 100 against a substrate. Inclusion of a pre-formed hole in this regard can help to allow the bracket 100 to be reused in the event of nail-gun misfire. In contrast, conventional brackets may be damaged in that event so as to be rendered unusable. In particular, the hole 140 is centered in a (partly) circular portion of the recessed portion 125, corresponding to the protrusion (and offset) of the support boss 128 away from the interior volume 102. Thus, for example, as shown in FIG. 2., a barrel 106 of a nail gun can be nested relatively securely into the circular portion to help ensure appropriate alignment with the hole 140 and help secure the bracket 100 in a staged configuration on the nail gun. Further, as also discussed above, firing of a nail through the hole 140 can result in beneficial local deformation of the bracket 100 relative to the corresponding substrate. In some examples, however, such a pre-formed hole may not be included, without loss of other benefits discussed herein (e.g., beneficial deformation of the recessed portion 125 during installation).

Additionally, the bracket 100 can include a keyhole cutout 160. In particular, in the example shown, the cutout 160 is located on the recessed portion 125 (and the support boss 128), spaced in the length direction apart from the hole 140 and the corresponding circular portion of the recessed portion 125. Thus, the bracket 100 can also be easily and securely connected to substrate using a pre-installed fastener. In some examples, including as shown, additional keyhole cutouts or other mounting openings can be provided (e.g., on a back wall of the base portion 105, as shown).

The gate portion 110 has a first protrusion 145 formed as an integral tab that extends to the outside of (and away from) the interior volume 102. The first protrusion 145 is thus arranged to receive an external force to push the gate portion 110 towards the base portion 105 and thereby hingedly move the gate portion 110 to a closed configuration. For example, an operator may extend a pole or other object from the ground to engage with the protrusion 145 and thus easily urge the bracket 100 into a closed configuration, even for relatively high installations.

In different examples, the protrusion 145 can exhibit different geometries. In some examples, a free end of the protrusion 145 can be oriented to extend away from the base portion 105 (e.g., toward the ground, for a ceiling installation). For example, as illustrated, the protrusion 145 can include a bend that helps both to space a free end of the protrusion 145 away from the body of the gate portion 110 and to orient the free end for easy engagement by an operator (e.g., from a distantly spaced floor of the relevant building).

In some examples, a latching mechanism can be provided on the gate portion 110 and the base portion 105. Correspondingly the external force on the first protrusion 145 can also help to engage a latching mechanism to secure the gate portion 110 in the closed configuration.

In particular, in the illustrated example, a latching mechanism can include a second aperture 150 on the gate portion 110. In some examples, a top edge of the aperture 150 can include a corresponding protrusion. For example, a protrusion can extend inwardly relative to the interior volume 102, and may be integrally formed on the gate portion 110 as a louver, another offset structure or otherwise. Correspondingly, the base portion can have a third protrusion formed as a tab 155 that extends outwardly relative to the interior volume 102 (e.g., also formed as an integral tab). The top edge of the aperture 150 (or other latch feature) and the third protrusion 155 (or other latch feature) can thus be matingly engaged by the closing of the bracket 100 (e.g., via remote manual engagement with the protrusion 145), to secure the gate portion 110 in the closed configuration - e.g., with the upward angle of the protrusion 155 securely retaining a corresponding upward angle at a top edge of the aperture 150, as shown in FIG. 1B, in particular). In some cases, correspondingly, engagement of the protrusion 145 by an operator can in particular urge the aperture 150 of the gate portion 110 and the third protrusion 155 of the base portion 105 towards each other. Further, although inverted configurations are possible, inclusion of the protrusion 155 on the base portion 105 and the aperture 150 on the gate portion 110 may provide a favorable alignment of forces during operations to close the bracket 100, particularly with angled profiles as shown and described.

In the illustrated example, the base portion 105 and gate portion 110 are integrally formed as part of a single component (e.g., formed from mild steel, spring steel, or other material). This configuration may provide particularly strong and usable brackets. Integral formation can also reduce the number of parts that a use is required to manage during installation. In other examples, however, other configurations are possible.

To allow easy installation and secure support of objects relative to a substrate, the bracket 100 is configured to be moved between an open (e.g., pre-installation) configuration and a closed (e.g., support) configuration. In some examples, as also noted above, a bracket can be configured to be manually moved from an open installation configuration to a closed support configuration (or vice versa, in some cases). For example, as also discussed above, once the bracket 100 is secured against a substrate an operator may manually (e.g., using a pipe or other reach-extender) press the first protrusion 145 to urge the gate portion 110 towards the base portion 105. Thus, even from far below a ceiling installation, the gate portion 110 can be easily latched in a closed configuration (e.g., by engaging the top edge of the aperture 150 and the third protrusion 155, to fully enclose a perimeter of the interior volume 102 of the bracket 100.

As noted above, when secured by a nail from a nail gun (e.g., via an installation process as described above), the recessed portion 125 of the base portion 105 of the bracket 100 can be pressed toward the substrate (e.g., upwardly from the perspective of FIG. 2). The corresponding flexion of the recessed portion 125 can help to create a tighter securement of the bracket 100 against the substrate.

In some examples, a hole can be provided in a gate portion to allow for easier alignment of a nail gun barrel or other fastening tool during installation. For example, during installation of the bracket 100, the nail gun barrel 106 may be inserted through a second hole 165 of the gate portion 110 (see, e.g., FIG. 2). In other words, in the open configuration, the second hole 165 of the gate portion 110 provides clearance for insertion of a nail gun barrel for attachment of the bracket 100 to a substrate. In particular, with the barrel 106 fully inserted through the second hole 165, the barrel may be axially aligned with the first hole 140 (and the corresponding area of the recessed portion 125) to fire a nail 108 to secure the bracket 100 against a substrate. The hole 165 can accordingly help to guide the barrel 106 towards the hole 140 of the base portion 105 (see also FIG. 1A) and the corresponding part of the recessed portion 125 (e.g., where the barrel 106 can be nested to magnetically or otherwise engage the bracket 100).

In some implementations, devices or systems disclosed herein can be utilized, manufactured, installed, etc. using methods embodying aspects of the disclosed technology. Correspondingly, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, should be understood to disclose, as examples of the disclosed technology, the utilized features and implemented capabilities of such device or system.

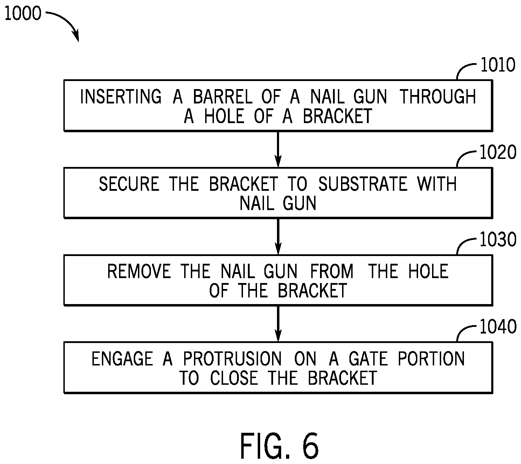

In this regard, as shown in FIG. 6, some implementations of the disclosed technology provide an example method 1000 for securing an object to a substrate of concrete. Although operations of the method in particular are discussed relative to the bracket 100, other brackets according to the disclosed principles can also be similarly employed. Further, some of the illustrated operations can be executed differently, or not at all, in some implementations.

In the illustrated example, the method includes inserting 1010 a barrel of a nail gun through a relevant hole (e.g., the second hole 165) to temporarily secure the bracket to the nail gun and correspondingly align the barrel with a base portion of the bracket (e.g., align the barrel with the hole 165 of the recessed portion 125 of the bracket 100).

The bracket can then be secured 1020 to the substrate with the nail gun. For example, after being aligned as above to be magnetically or otherwise secured to the bracket 100 (e.g., as detailed above relative to the support boss 128), the nail gun can be operated to fire a nail through a pre-formed (or other) hole on the bracket 100 (e.g., the hole 140). As detailed above, this fastening operation can in some cases intentionally cause a deformation of a base portion of the bracket (e.g., as detailed for the base portion 105, above). The nail gun can then be removed 1030 from the bracket, e.g., by being axially withdrawn from the second hole 165, and then used for further operations.

Once the bracket is secured 1020, a protrusion on a gate portion of the bracket can be engaged 1040 to move the bracket to a closed configuration. For example, a pipe or other rigid body can be used by an operator standing on the ground to engage the protrusion 145 of the bracket 100 and thereby hingedly move the gate portion 110 to the closed configuration. Correspondingly, the same force from an operator can cause a latching engagement of the gate portion 110 and the base portion 105 (e.g., the edge of the aperture 150 and third protrusion 155 may be interlocked or otherwise engaged 1040, to secure the bracket in a closed configuration).

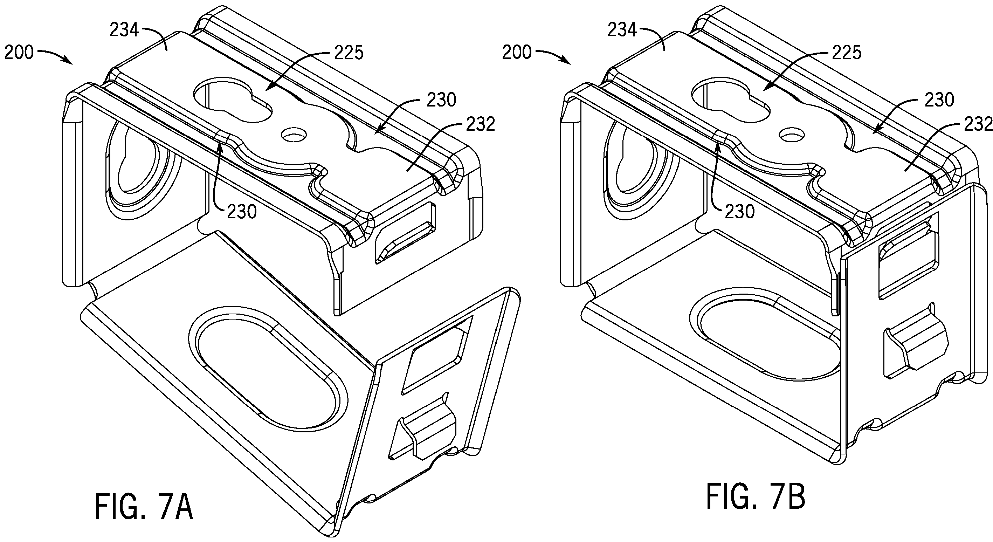

In other examples, other configurations are possible. For example, as shown in FIG. 7, a bracket 200 can be provided as an alternative configuration of the bracket 100. Generally, the bracket 200 is similar to the bracket 100, and discussion of the bracket 100 above thus also applies to the bracket 200.

In some regards, however, the bracket 200 is different. For example, as compared to the bracket 100, and relative to the orientation shown, the bracket 200 exhibits a larger length along a top and bottom side and a correspondingly larger aspect ratio of length over width. The bracket 200 also exhibits a relatively long recessed portion 225, which is generally similar to the recessed portion 125 but extends over the entire length of the top (as shown) side of the bracket 200. Either or both of these different aspects can, in some examples, be combined together with other aspects of the configuration of the bracket 100, as discussed above.

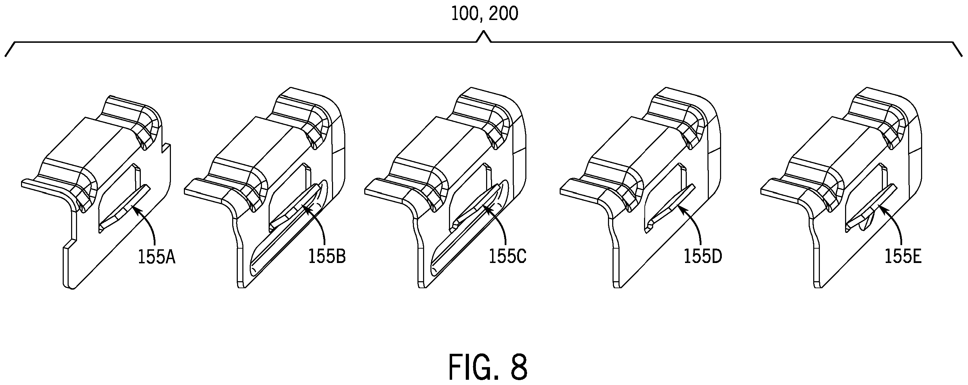

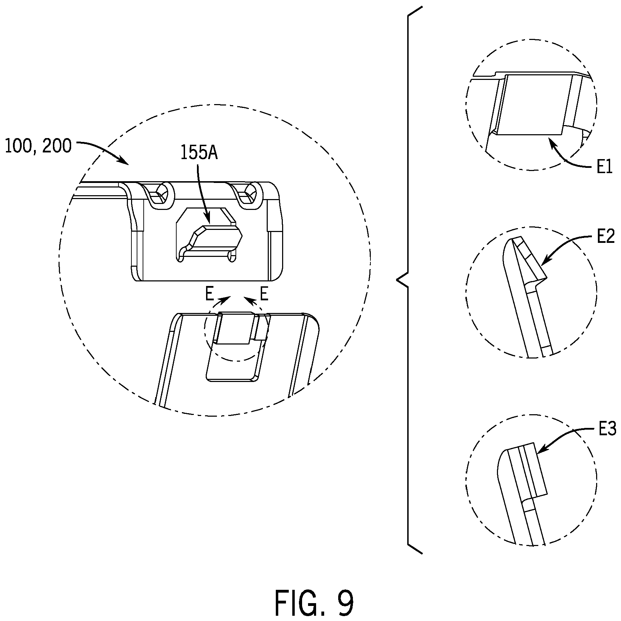

The brackets 100, 200 as shown exhibit particularly beneficial latching arrangements, relative to the ease of operation for an operator (e.g., via the protrusion 145, from far below) and relative to the secureness of the closure. In other examples, however, other configurations are possible, including as variously illustrated in FIGS. 8 and 9. As shown in FIG. 8, in particular, various geometries for a latch tab 155A through 155E are possible, and reinforcing embosses, gussets or other features can be included in some cases for improved strength or other performance. As shown in FIG. 9 in particular, a latch feature of a gate portion can be variously configured as a hook tab E1, as a louvre E2, or as an offset E3, as well as in a variety of other ways.

Thus, examples of the disclosed technology can provide an improved bracket for securing objects (e.g., conduit or cables) to a substrate of concrete or other materials. In some examples, brackets according to the disclosed technology can substantially reduce the time and labor that may be required during installation and use, such as by obviating the need to hold the bracket with one hand and operate a nail gun with the other to secure the bracket to the substrate. Further, some examples of the disclosed technology can be releasably engaged with the barrel of the nail gun before positioning the bracket in place, thereby allowing for attachment of the bracket to a substrate in hard or difficult areas to reach, including instances in which a nail gun is attached to an extension pole to secure a bracket high overhead. Additionally, some examples of the disclosed technology can be used, without modification, on a variety of nail guns having respective barrels with a variety of sizes.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the nail gun bracket, components thereof or systems described may be incorporated into/used in corresponding methods and vice versa.

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As used herein, unless otherwise defined or limited, directional terms are used for convenience of reference for discussion of particular figures or examples. For example, references to downward (or other) directions may be used to discuss aspects of a particular example or figure, but do not necessarily require similar orientation or geometry in all installations or configurations.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "exactly one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of' (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

Also as used herein, unless otherwise limited or defined, "integral" and derivatives thereof (e.g., "integrally") describe elements that are manufactured as a single piece without fasteners, adhesive, or the like to secure separate components together. For example, an element that is stamped, cast, or otherwise molded as a single-piece component from a single piece of sheet metal or other continuous single piece of material, without rivets, screws, other fasteners, or adhesive to hold separately formed pieces together, is an integral (and integrally formed) element. In contrast, an element formed from multiple pieces that are separately formed initially then later connected together, is not an integral (or integrally formed) element.

Unless otherwise specifically indicated, ordinal numbers are used herein for convenience of reference, based generally on the order in which particular components are presented in the relevant part of the disclosure. In this regard, for example, designations such as "first," "second," etc., generally indicate only the order in which a thus-labeled component is introduced for discussion and generally do not indicate or require a particular spatial, functional, temporal, or structural primacy or order. Relatedly, similar or identical components may be referred to with different ordinal numbers in different contexts.

The previous description of the disclosed examples is provided to enable any person skilled in the art to make or use the disclosed technology. Various modifications to these examples will be readily apparent to those skilled in the art, and the generic principles defined herein may be applied to other examples without departing from the spirit or scope of the disclosed technology. Thus, the disclosed technology is not intended to be limited to the examples shown herein but is to be accorded the widest scope consistent with the principles and novel features disclosed herein.

## Claims

1. A nail gun bracket (100) for supporting an object relative to a substrate of concrete or other material the nail gun bracket comprising:
a base portion (105);
a gate portion (110) hingedly connected to the base portion;
the gate portion (110) being movable between an open configuration, to receive an object into an interior volume (102) of the bracket, and a closed configuration, to retain the object within the interior volume; and
the base portion including an object side (105B) that faces toward the interior volume and a substrate side (105A) opposite the object side and configured to face toward the substrate in an installed configuration, the substrate side defining:
a contact portion (115) that defines a contact plane (120) along the substrate for an installed configuration of the nail gun bracket; and
a recessed portion (125, 130) offset from the contact plane toward the interior volume, the recessed portion including a support boss (128) that receives a nail gun nail to secure the base portion to the substrate;
the support boss (128) one or more of:
protruding outwardly away from the interior volume (102) to a support-boss distal surface (128A) that is offset from the contact plane toward the interior volume; or
extending in an elongate direction along the base portion between, and being offset toward the interior volume from, a first contact pad (132) and a second contact pad (134).

2. The nail gun bracket of claim 1, wherein the first and second contact pads (132, 134) are configured to seat on the substrate in the installed configuration, and optionally or preferably wherein the first and second contact pads (132, 134) extend along the contact plane (120).

3. The nail gun bracket of either of claim 1 or 2, wherein the support boss (128) includes a first hole (140) to receive the nail gun nail through the base portion and into the substrate.

4. The nail gun bracket of claim 3, wherein the support boss (128) further includes a keyhole cutout (160), spaced apart from the first hole (140).

5. The nail gun bracket of any of the preceding claims, wherein:
the contact portion further includes rails (122) spaced from opposed lateral sides of the support boss to extend along the contact plane and configured to seat on the substrate in the installed configuration.

6. The nail gun bracket of claim 5, wherein the rails (122) are separated from the support boss by recessed channels of the recessed portion (130) having a greater offset from the contact plane toward the interior volume than does the support boss (128).

7. The nail gun bracket of claim 6, wherein the recessed channels extend along an entire elongate length of the contact portion.

8. The nail gun bracket of any of the preceding claims, wherein the gate portion (110) includes a protrusion (145) that extends away from the interior volume, and the gate portion (110) is movable from the open configuration to the closed configuration by applying a closing force to the protrusion (145) at an opposite side of protrusion from the base portion (105).

9. The nail gun bracket of claim 8, wherein the base portion (105) includes a protruding tab (155); and
wherein the gate portion (110) includes an aperture (150) with an upper edge, the protruding tab being configured to be received into the aperture to be retained by the upper edge as the gate portion is moved to the closed configuration.

10. The nail gun bracket of claim 9, wherein the protruding tab (155) angles toward the contact plane.

11. The nail gun bracket of any of the preceding claims, wherein the gate portion (110) includes an access opening (165) aligned with the support boss (128) to receive a nail gun barrel (106) through the access opening to install the nail gun nail through the support boss.

12. A method for supporting an object relative to a substrate of concrete or other material, the method comprising:
with a nail gun (106), securing a nail gun bracket (100) of any of the preceding claims to a substrate by firing a nail (108) from within the interior volume through the support boss (182) to deform the support boss toward the substrate;
after securing the bracket to the substrate, removing the nail gun from the bracket and, with the gate portion (110) in an open configuration, inserting the object past a gate portion into the interior volume (102) of the bracket; and
securing the object within the interior volume (102) by moving the gate portion (110) toward the base portion (105), from the open configuration to a closed configuration.

13. The method of claim 12, wherein securing the nail gun bracket includes extending a barrel of the nail gun through an access opening (165) in the gate portion of the bracket.

14. The method of either of claims 12 or 13, wherein moving the gate portion toward the base portion includes engaging a protrusion (145) of the gate portion that extends away from the interior volume to move the base portion (105) toward the substrate.

15. The method of any of claims 12 through 14, wherein the support boss (128) is deformed to contact the substrate in the installed configuration.
